Europäisches Patentamt

European Patent Office

Office européen des brevets

(11) Publication number: **0 251 309 B1**

## EUROPEAN PATENT SPECIFICATION

(45) Date of publication of patent specification: **30.09.92**   (51) Int. Cl.⁵: **C03B 37/16**

(21) Application number: **87109462.9**

(22) Date of filing: **01.07.87**

(54) **Cutting device for optical fibers.**

(30) Priority: **02.07.86 DE 3622244**

(43) Date of publication of application:
   **07.01.88 Bulletin  88/01**

(45) Publication of the grant of the patent:
   **30.09.92 Bulletin  92/40**

(84) Designated Contracting States:
   **DE FR GB IT**

(56) References cited:
   **DE-A- 2 640 501**

(73) Proprietor: **Standard Elektrik Lorenz Aktien-gesellschaft
Lorenzstrasse 10
W-7000 Stuttgart 40(DE)**

(84) Designated Contracting States:
   **DE**

(73) Proprietor: **ALCATEL N.V.
Strawinskylaan 537 (World Trade Center)
NL-1077 XX Amsterdam(NL)**

(84) Designated Contracting States:
   **FR GB IT**

(72) Inventor: **Kaiser, Manfred
Zeppelinstrasse 2
W-7254 Hemmingen(DE)**

(74) Representative: **Gähr, Hans-Dieter, Dipl.-Ing.
(FH) et al
Standard Elektrik Lorenz AG Patent- und
Lizenzwesen Postfach 30 09 29
W-7000 Stuttgart 30(DE)**

## Description

The present invention relates to a cutting device for optical fibers which are subjected to axial tension and whose surfaces are scored with a blade.

German Patent No. 29 25 070 discloses such a device for cutting optical fibers. These devices operate on the following basic principle: The surface of the optical fiber is scored and subjected to axial tension in a stretched or slightly curved position. Due to the axial tension, the surface crack propagates across the fiber, with the assumed direction of propagation of the crack being perpendicular to the axis of the optical fiber, in the absence of disturbing forces. However, in order to obtain really flat cut surfaces of optically perfect quality, the deviation from the angle of 90° with respect to the axis of the optical fiber being as small as possible, an extremely precise control over the cutting conditions is necessary. This has so far not been achieved with conventional devices, at least not in long-term operation, despite the considerable mechanical complexity involved.

Furthermore, without exception, in the known mechanical cutting devices for optical fibers, the blade is moved while the optical fiber remains fixed. The high precision required of the blade guide and the sequence of movements of the blade, which has to be controlled with accuracy, result in mechanically complex and therefore expensive solutions. Furthermore, there is an obvious disproportion between the size of the cutting device and the optical fiber to be cut. Due to their complexity, the cutting devices are too large to be integrated into a splicing device.

It is the object of the present invention to make optical fiber cuts more optically perfect with only a small angle error, with the arrangement for cutting optical fibers being part of or easy to fit into a splicing device to reduce equipment costs and avoid any unnecessary operations.

This object is achieved by the means set forth in the characterizing part of claim 1.

Further advantageous features are set forth in the subclaims.

In contrast to prior art devices, the solution according to the invention has many advantages. Thus, the cutting force is adjustable in a wide range because the distance, e.g., between the optical fiber and the blade, or the force of the pressure wave, can be changed. The cutting device has a small size and can readily be integrated into a splicing device. As the device contains no moving parts with dimensional variations, higher precision is achieved. The cutting device in accordance with the invention can be manufactured at low cost and requires practically no maintenance. A worn blade can be replaced readily and rapidly.

The invention will now be explained with reference to the accompanying drawings, in which:

Fig. 1 is a schematic top view of a device in accordance with the invention;

Fig. 2 is a side view of the device of Fig. 1, and

Fig. 3 shows the device of Fig. 1 in the same representation as in Fig. 1 after an arc discharge and generation of the pressure wave.

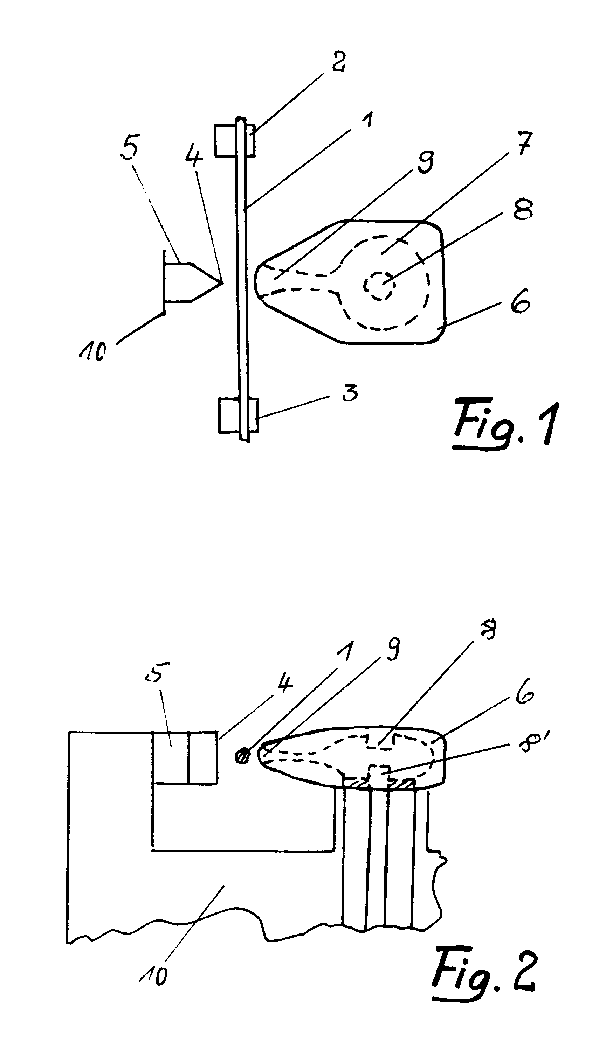

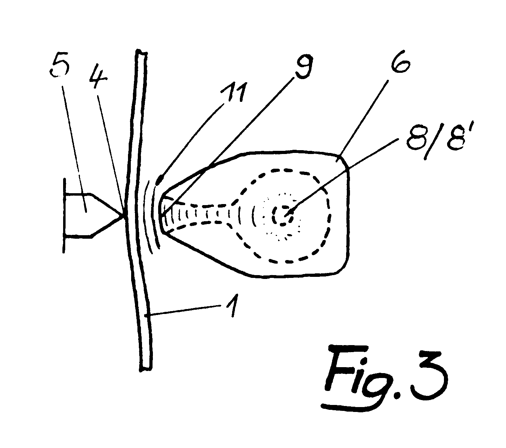

Fig. 1 is a schematic representation of a device for cutting optical fibers, which can be provided in a spicing device, in accordance with the invention. An optical fiber 1 is fixed between two points of attachment 2 and 3. Approximately in the center between the points of attachment 2 and 3, a blade body 5 which is provided with a blade 4 is located on one side of the optical fiber 1. The blade body with the blade 4 or parts thereof can be of aluminum oxide, tungsten carbide or diamond material. The distance between the optical fiber 1 and the blade 4 can be controlled via a microscope (not shown) and adjusted, if necessary. Located on the other side of the optical fiber 1, is a discharge cell 6 with its opening 9 opposite the blade 4. As shown in Fig. 2, the discharge cell 6 and the blade body 5 with the blade 4 are mounted in one plane on a common holding device 10, so that after adjustment, the distance between the discharge cell 6 and the optical fiber 1 has a predetermined and well-defined value. Between the points of attachment 2 and 3, the optical fiber 1 is subjected to an axial tension of 1 to approximately 5 N. The most favorable value of the axial tension depends on the type of optical fiber 1, the material and the shape of the blade 4, and on the pressure provided by the discharge cell 6. The discharge cell 6 has two electrodes 8 and 8′ disposed in a given spaced relationship from each other. In the hollow space 7 between the electrodes 8 and 8′, a short-term arc discharge is produced which generates a pressure wave 11 traveling through the outlet 9 in the direction of the optical fiber 1. This sequence of operations will be explained in more detail with the help of Fig. 3.

Rather than by the electric high-voltage discharge in the discharge cell 6, the pressure wave 11, by which the optical fiber 1 is moved after the arc discharge has been produced, can also be generated by a piezoelectric sound generator. However, the use of the high-voltage discharge is the obvious choice since high voltage is present in a splicing device at any rate and since this method of generating pressure is reliable and requires practically no maintenance.

Fig. 2 is a side view of the arrangement described above. The optical fiber 1, which is shown here only in cross-section, is located approximately at the center between the blade 4 of the blade body 5 and the discharge cell 6. The blade body 5 and the discharge cell 6 are joined with each other via a common holding device 10. As mentioned above, the distance between the optical fiber 1 and the blade 4 and that between the optical fiber 1 and the outlet 9 of the discharge cell 6 can be adjusted with high precision via a microscope which is present in a splicing device at any rate.

Fig. 3 is a top view of the arrangement described above. An arc discharge has been produced in the discharge cell 6 between the electrodes 8 and 8′ which generates a pressure wave 11 being guided through the outlet 9 in the direction of the optical fiber 1. The pressure wave 11 deflects the optical fiber 1 in the direction of the blade 4 of the blade body 5 until that surface of the optical fiber 1 not facing the outlet 9 strikes the blade 4. Thus, the surface of the optical fiber 1 is scored more or less hard, depending on the force of the pressure wave 11. The direct effect of the axial tension on the optical fiber 1 is that the surface flaw on the optical fiber 1 caused by scoring propagates perpendicular to the direction of the tension through the optical fiber 1 and separates it.

As mentioned above, the depth to which the optical fiber 1 is scored depends on several factors. Apart from the optical fiber type and from the material of which the blades 4 are made, the condition of the blade 4 is especially important, i.e., whether the blade 4 is still sharp or whether it is worn. If the blade can still be described as sharp, a small pressure 11 wave is sufficient to cause a surface flaw on the optical fiber 1 by scoring.

As the blade 4 becomes worn, the pressure 11 wave must be increased to obtain approximately the same conditions.

If the blade 4 becomes worn beyond a given degree, it must be replaced or reworked because otherwise the optical fiber 1 can no longer be separated in an optically perfect manner.

## Claims

1. Cutting device for an optical fiber (1) subjected to axial tension, comprising a blade (4) for scoring the surface of the optical fiber (1), **characterized in** that the blade is (4) fixed, and that means are provided for generating a pressure wave (11) by which the optical fiber (1) is deflectable against the fixed blade (4).

2. A cutting device as claimed in claim 1, characterized in that a blade body (5) with the blade (4) is located on one side of the optical fiber (1), that a component generating the pressure wave (11) is located on the other side of the optical fiber (1), and that the blade body (5) and the component generating the pressure wave (11) are movable jointly in one plane.

3. A cutting device as claimed in claims 1 and 2, characterized in that the pressure wave (11) is generated by an arc discharge in a discharge cell (6).

4. A cutting device as claimed in claims 1 and 2, characterized in that the pressure wave (11) is generated by a piezoelectric sound generator.

## Patentansprüche

1. Schneidevorrichtung für eine unter axialem Zug stehende Glasfaser (1) mit einer Schneide (4) zum Anritzen der Glasfaseroberfläche, **dadurch gekennzeichnet,** daß die Schneide (4) feststehend angeordnet ist und Mittel zur Erzeugung einer Druckwelle (11) vorgesehen sind, mit der die Glasfaser (1) gegen die feststehende Schneide (4) auslenkbar ist.

2. Schneidevorrichtung nach Anspruch 1, dadurch gekennzeichnet, daß auf der einen Seite der Glasfaser (1) ein Schneidenkörper (5) mit der Schneide (4) und auf der anderen Seite der Glasfaser (1) ein die Druckwelle (11) erzeugendes Bauelement angeordnet sind und daß der Schneidenkörper (5) und das die Druckwelle (11) erzeugende Bauelement in einer Ebene gemeinsam verschiebbar sind.

3. Schneidevorrichtung nach den Ansprüchen 1 und 2, dadurch gekennzeichnet, daß die Druckwelle (11) durch eine Bogenent ladung in einer Entladungszelle (6) erzeugt wird.

4. Schneidevorrichtung nach den Ansprüchen 1 und 2, dadurch gekennzeichnet, daß die Druckwelle (11) durch einen Piezoschallgeber erzeugt wird.

## Revendications

1. Dispositif de coupe d'une fibre optique (1) soumise à une tension axiale, constitué d'une lame (4) servant à entailler la surface de la fibre optique (1), caractérisé par le fait que la lame (4) est fixe et qu'il contient des moyens de production d'une onde de pression (11) permettant d'amener la fibre optique (1) contre la lame fixe (4).

2. Dispositif de coupe selon la revendication 1, caractérisé par le fait que le porte-lame (5) avec la lame (4) se trouve d'un côté de la fibre optique (1), qu'un composant produisant l'onde de pression (11) se trouve de l'autre côté de la fibre optique (1) et que le porte-lame (5) et le composant produisant l'onde de pression (11) peuvent se déplacer conjointement dans un même plan.

3. Dispositif de coupe selon les revendications 1 et 2, caractérisé par le fait que l'onde de pression (11) est produite par une décharge d'arc dans une cellule à décharges (6).

4. Dispositif de coupe selon les revendications 1 et 2, caractérisé par le fait que l'onde de pression (11) est produite par un générateur sonore piézo-électrique.

_Fig. 1_

_Fig. 2_

Fig.3